(19) Europäisches Patentamt
European Patent Office
Office européen des brevets

(11) **EP 2 718 651 B1**

(12) **EUROPEAN PATENT SPECIFICATION**

(45) Date of publication and mention
of the grant of the patent:
**29.07.2015 Bulletin 2015/31**

(21) Application number: **12753725.6**

(22) Date of filing: **03.09.2012**

(51) Int Cl.:
**F28D 20/00** *(2006.01)*

(86) International application number:
**PCT/EP2012/067120**

(87) International publication number:
**WO 2013/037658 (21.03.2013 Gazette 2013/12)**

(54) **THERMAL ENERGY STORAGE AND RECOVERY ARRANGEMENT**

WÄRMEENERGIESPEICHER UND WIEDERGEWINNUNGSANORDNUNG

AGENCEMENT DE STOCKAGE ET DE RÉCUPÉRATION D'ÉNERGIE THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2011 EP 11181344**

(43) Date of publication of application:
**16.04.2014 Bulletin 2014/16**

(73) Proprietor: **Siemens Aktiengesellschaft
80333 München (DE)**

(72) Inventor: **LAURBERG, Hans
DK-8000 Århus C (DK)**

(56) References cited:
**WO-A2-2009/044139      FR-A1- 2 916 101
FR-A1- 2 922 608**

**Description**

Field of invention

The present invention relates to the field of temporarily storing thermal energy. In particular, the present invention relates to a thermal energy storage and recovery arrangement comprising two thermal energy storages and a compression and expansion unit. Further, the present invention relates to a thermal energy storage and recovery system comprising such a thermal energy storage and recovery arrangement. Moreover, the present invention relates to a method for storing and recovering thermal energy.

FR-A1-2916101 discloses an arrangement and a method according to the preamble of claims 1 and 14.

Art Background

The production of electric power from various types of alternative energy sources such as for instance wind turbines, solar power plants and wave energy plants is not continuous. The production may be dependent on environmental parameters such as for instance wind speed (for wind turbines), sunshine intensity (for solar power plant) and wave height and direction (for wave energy plants). There is very often little or no correlation between energy production and energy demand.

One known approach to solve the problem of uncorrelated electric power production and electric power demand is to temporally store energy, which has been produced but which has not been demanded, and to release the stored energy at times at which there is a high demand. In the past there have been suggested many different methods to temporarily store energy. Suggested methods are for instance (a) mechanical energy storage methods e.g. pumped hydro storage, compressed air storage and flywheels, (b) chemical energy storage methods e.g. electrochemical batteries and organic molecular storage, (c) magnetic energy storage, and (d) thermal energy storage.

US 2010/0251711 A1 discloses an apparatus for storing energy. The apparatus includes a compression chamber for receiving a gas, a compression piston for compressing gas contained in the compression chamber, a first heat store for receiving and storing thermal energy from gas compressed by the compression piston, an expansion chamber for receiving gas after exposure to the first heat store, an expansion piston for expanding gas received in the expansion chamber, and a second heat store for transferring thermal energy to gas expanded by the expansion piston. Thus, an energy storage apparatus is provided in which first and second heat storage means are placed within a thermal heat pump cycle to produce a hot and cold store respectively during charging. Energy is then recoverable in a discharging mode by passing gas through the cooled second heat storage means, compressing gas cooled by the second heat storage means, heating the cooled compressed gas by exposing the gas to the heated first heat storage means, and allowing the heated gas to expand by doing work on generator means. However, using cold storages induces some challenges on the used machinery.

There may be a need for improving the temporal storage of thermal energy in particular with respect to the implementation and the efficiency of a thermal energy storage and recovery system.

Summary of the Invention

This need may be met by the subject matter according to the independent claims. Advantageous embodiments of the present invention are described by the dependent claims.

According to a first aspect of the invention, a thermal energy storage and recovery arrangement is provided. The arrangement comprises a first thermal energy storage, a compression and expansion unit coupled to the first thermal energy storage, and a second thermal energy storage coupled to the compression and expansion unit. In a charging mode, the first thermal energy storage is adapted for receiving a working medium being supplied to the thermal energy storage and recovery arrangement and for releasing thermal energy to the received working medium, the compression and expansion unit is adapted for receiving the working medium from the first thermal energy storage and for compressing the working medium, the second thermal energy storage is adapted for receiving the compressed working medium from the compression and expansion unit, for receiving thermal energy from the compressed working medium and for storing at least a part of this energy, and the compression and expansion unit is adapted for receiving the compressed working medium from the second thermal energy storage and for expanding the compressed working medium. The first thermal energy storage and the second thermal energy storage are adapted to work at a temperature being equal to or higher than the ambient temperature of the thermal energy storage and recovery arrangement.

One of the basic ideas of the invention is to provide a thermal energy storage and recovery arrangement using standard components.

The term "thermal energy storage" may denote any kind of storage being able to store thermal energy, for example for later use. The storages may be employed to balance energy demand between day time and night time.

The first thermal energy storage and the second thermal energy storage may be hot storages. The term "hot storage" may denote any storage working at a temperature above or at ambient temperature. The ambient temperature may denote the temperature of the surrounding medium. "Working at or above ambient temperature" may denote that the storage receives the working medium at or above ambient temperature and outputs the working medium at or above ambient temperature.

The term "compression and expansion unit" may denote any kind of unit being able to compress and to expand the working medium. When compressing the working medium, the pressure of the working medium may become higher. When expanding the working medium, the pressure of the working medium may become lower.

The working medium may be any kind of medium, fluid or gaseous medium, being suitable to be used in such an energy storage and recovery arrangement.

The different elements of the arrangement, i.e. storages and compression and expansion unit, may be coupled for example via pipes, for providing a thermally coupling between the elements of the arrangement.

The term "charging mode" may denote an operational mode of the arrangement, wherein energy, e.g. thermal energy, is stored into the arrangement.

When using cold materials or mediums, a huge amount of humidity may occur, for instance caused by condensed water, which may also lead to creation of ice. This leads to specific requirements of the material used for the storages and connection pipes. By using storages (hot storages) working at a temperature at or above ambient temperature, these requirements may be decreased.

According to an embodiment of the invention, in a discharging mode, the compression and expansion unit is adapted for receiving a working medium and for compressing the received working medium, the second thermal energy storage is adapted for receiving the compressed working medium from the compression and expansion unit and for releasing thermal energy to the compressed working medium, the compression and expansion unit is adapted for receiving the compressed working medium from the second thermal energy storage and for expanding the compressed working medium, and the first thermal energy storage is adapted for receiving the expanded working medium from the compression and expansion unit, for receiving thermal energy from the expanded working medium, for storing at least a part of this energy and and for outputting the working medium.

The term "discharging mode" may denote an operational mode of the arrangement, wherein energy, e.g. thermal energy, is extracted from the arrangement.

The thermal energy storage and recovery arrangement may be operated in both directions, i.e. in a charging and in a discharging mode. The same components may be used for both modes.

According to a further embodiment of the invention, the first thermal energy storage is adapted to work at a first pressure, and the second thermal energy storage is adapted to work at a second pressure being higher than the first pressure, wherein the first pressure corresponds to an ambient pressure of the thermal energy storage and recovery arrangement.

Thus, the first thermal energy storage may be a "non-pressure" storage. This means that the pressure in this storage is equal to the pressure of the working medium when inputted to the arrangement, i.e. is equal to the ambient pressure.

According to a further embodiment of the invention, the compression and expansion unit comprises at least one compression means and at least one expansion means.

The at least one compression means may be a compressor. A compressor may be a mechanical device that increases the pressure of medium flowing through the compressor by reducing its volume. Such a compressor may be for example a gas compressor. The compressor may be further adapted to transport the medium through a pipe.

The at least one expansion means may be an expander, for example a turbo-expander or expansion turbine. The expander may be connected with the compressor via a shaft.

The expander may be adapted to expand the working medium flowing through the expander, thereby producing work which may be used to drive the compressor via the shaft or to drive a generator coupled to the shaft. When expanding the working medium, the pressure of the working medium will be decreased.

According to a further embodiment of the invention, the thermal energy storage and recovery arrangement further comprises a heat exchanging device, wherein a first side of the heat exchanging device is coupled between the compression and expansion unit and the first thermal energy storage.

By using a heat exchanging device, the same working medium may be recycled and used within a closed cycle.

According to a further embodiment of the invention, the first side of the heat exchanging device is coupled between an expansion means of the compression and expansion unit and the first thermal energy storage, and wherein a second side of the heat exchanging device is coupled to an external device.

An external cycle or device may be coupled to the thermal energy storage and recovery arrangement. The external device may be for example a district heating system.

According to a further embodiment of the invention, the first side of the heat exchanging device is coupled between a compression means of the compression and expansion unit and the first thermal energy storage, and wherein a second side of the heat exchanging device is coupled between the second thermal energy storage and an expansion means of the compression and expansion unit.

According to this embodiment, the maximal temperature of the first thermal energy storage may be chosen lower than the input temperature for the compression and expansion unit. This may lead to a smaller temperature range within the two energy storages. Small temperature ranges may lead to less material problems as the materials of the storages do not have to withstand extreme or at least cold temperatures and at the same time extreme hot temperatures.

According to a further embodiment of the invention, the working medium is gas, in particular air.

Waste heat may leave the arrangement after expansion and may have a pressure according to the ambient pressure. In this case, for example the surrounding air may be used as the working medium.

According to a further embodiment of the invention, the first thermal energy storage comprises a liquid medium as storage material, in particular wherein the liquid medium is water.

In particular when the temperature range of the storages is lower by using heat exchanging devices, the heating or storage material may be water. Water is an extremely cheap material and comprises a heat capacity that is for example higher than that of stones. Thus, the storage may be made smaller.

According to a further embodiment of the invention, the temperature of the medium being supplied to the system corresponds to an ambient temperature of the thermal energy storage and recovery arrangement.

Thus, the arrangement may use directly the surrounding air.

According to a second aspect of the invention, a thermal energy storage and recovery system is provided. The thermal energy storage and recovery system comprises a thermal energy storage and recovery arrangement having the above mentioned features and a heat consumption arrangement, which is connected directly or indirectly to the thermal energy storage and recovery arrangement and which is adapted to receive thermal energy from the medium of the thermal energy storage and recovery arrangement.

The heat consumption arrangement may be connected via pipes to the thermal energy storage and recovery arrangement. The heat consumption arrangement may provide a heat transfer medium to the thermal energy storage and recovery arrangement as well as receive a heat transfer medium from the thermal energy storage and recovery arrangement. The medium may provide the thermal energy.

According to an embodiment of the invention, the heat consumption arrangement comprises a district heating installation system.

The district heating installation system may receive the heat transfer medium from the thermal energy storage and recovery arrangement and may provide the heat transfer medium to the thermal energy storage and recovery arrangement. The district heating installation system may comprise a heat exchanger system which thermally connects the heat transfer medium with a fluid such as for instance water. Thereby, the district heating installation may receive comparatively cold water from a water installation via a water inlet and may provide hot or warm water to the water installation via a water outlet.

According to a further embodiment of the invention the thermal energy storage and recovery system further comprises a control unit, which is connected to at least one of the thermal energy storage and recovery arrangement and the heat consumption arrangement. The control unit is adapted to control the operation of the thermal energy storage and recovery system.

According to an embodiment of the invention, the first thermal energy storage is part of the district heating installation system.

In this case, it might be not necessary to build a separate storage for the thermal energy storage and recovery arrangement, but to reuse an existing storage of the district heating installation system.

In one embodiment of the thermal energy storage and recovery arrangement, for the discharge cycle, the compressor part of the compression and expansion unit may be equipped with a cooling unit. Thus, the pressure created by the compressor may be created without temperature increase. The pressurized medium, for instance gas, may be later heated by the district heating installation system.

It should be understood that features (individually or in any combination) disclosed, described, used for or mentioned in respect to the description of an embodiment of an thermal energy storage and recovery arrangement may also be (individually or in any combination) applied, used for, or employed for a method for storing and recovering thermal energy in a thermal energy storage and recovery arrangement.

According to a third aspect of the invention, a method for storing and recovering thermal energy in a thermal energy storage and recovery arrangement is provided. The method comprises in a charging mode, receiving, by a first thermal energy storage, a working medium being supplied to the thermal energy storage and recovery arrangement and releasing, by the first thermal energy storage, thermal energy to the received working medium, receiving, by a compression and expansion unit coupled to the first thermal energy storage, the working medium from the first thermal energy storage and compressing, by the compression and expansion unit, the working medium, receiving, by a second thermal energy storage coupled to the compression and expansion unit, the compressed working medium from the compression and expansion unit, receiving, by the second thermal energy storage, thermal energy from the compressed working medium and storing at least a part of this energy in the second thermal energy storage, and receiving, by the compression and expansion unit, the compressed working medium from the second thermal energy storage and expanding, by the compression and expansion unit, the compressed working medium, wherein the first thermal energy storage and the second thermal energy storage are adapted to work at a temperature being equal to or higher than the ambient temperature of the thermal energy storage and recovery arrangement.

According to a further aspect of the invention, there is provided a computer program for storing and recovering thermal energy in a thermal energy storage and recovery arrangement. The computer program, when being executed by a data processor, is adapted for controlling the method as described above.

As used herein, reference to a computer program is intended to be equivalent to a reference to a program element containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

According to a further aspect of the invention there is provided a computer-readable medium (for instance a CD, a DVD, a USB stick, a floppy disk or a hard disk), in which a computer program for storing and recovering thermal energy in a thermal energy storage and recovery arrangement is stored, which computer program, when being executed by a processor, is adapted to carry out or control a method for storing and recovering thermal energy in a thermal energy storage and recovery arrangement.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings to which the invention is not limited.

Fig. 1 illustrates a thermal energy storage and recovery arrangement according to an embodiment;

Fig. 2 illustrates a thermal energy storage and recovery arrangement in charging mode according to an embodiment;

Fig. 3 illustrates the thermal energy storage and recovery arrangement of Fig. 2 in discharging mode according to an embodiment;

Fig. 4 illustrates the thermal energy storage and recovery arrangement according to an embodiment;

Fig. 5 illustrates the thermal energy storage and recovery arrangement according to an embodiment.

Detailed Description

The illustration in the drawings is in schematic form. It is noted that in different figures, similar or identical elements are provided with the same reference signs.

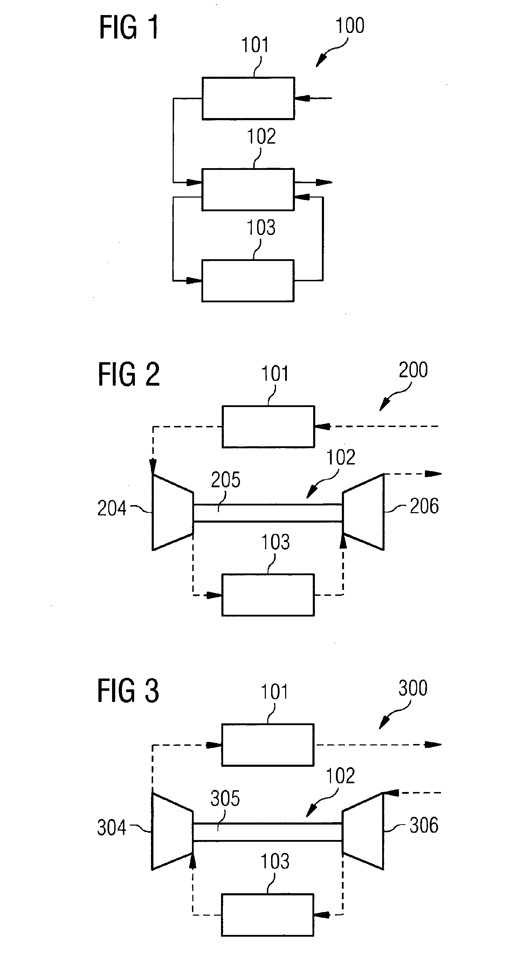

In Fig. 1, a thermal energy storage and recovery arrangement 100 according to an embodiment is shown. The thermal energy storage and recovery arrangement comprises a first thermal energy storage 101 and a second thermal energy storage 103. The first thermal energy storage is adapted to work at a temperature being equal to or higher than the ambient temperature. This means that the first thermal energy storage receives a working medium having a temperature equal to or higher than the ambient temperature and releases the working medium at a temperature equal to or higher than the ambient temperature. In one embodiment, the first thermal energy storage is adapted to receive as an input a working medium having ambient temperature and having ambient pressure. The second thermal energy storage is also adapted to work at a temperature being equal to or higher than the ambient temperature.

The thermal energy storage and recovery arrangement comprises further a compression and expansion unit 102. The compression and expansion unit is coupled to the first thermal energy storage and the second thermal energy storage.

In a charging mode, the first thermal energy storage receives a working medium being supplied to the thermal energy storage and recovery arrangement. Further, it releases thermal energy, stored in the first thermal energy storage, to the received working.

Subsequently, the compression and expansion unit receives the working medium from the first thermal energy storage and compresses the working medium. Then, the second thermal energy storage receives the compressed working medium from the compression and expansion unit, receives thermal energy from the compressed working medium and stores at least a part of this energy. Following to that, the compression and expansion unit receives the compressed working medium from the second thermal energy storage and expands the compressed working medium.

In a discharging mode, the compression and expansion unit 102 receives a working medium and compresses the received working medium. Then, the second thermal energy storage 103 receives the compressed working medium from the compression and expansion unit and releases thermal energy to the compressed working medium. Subsequently, the compression and expansion unit receives the compressed working medium from the second thermal energy storage and expands the compressed working medium. Then, the first thermal energy storage 101 receives the expanded working medium from the compression and expansion unit, receives thermal energy from the expanded working medium and outputs the working medium, for example to a district heating installation system.

Fig. 2 shows charge cycle of a thermal energy storage and recovery arrangement 200 according to an embodiment.

First, a first thermal energy storage 101 receives a working medium, for example air, at an ambient temperature and normal pressure. In the first thermal energy storage 101, energy is released to the working medium as heat in the thermal energy storage. When being output from the first thermal energy storage, the working medium is above ambient temperature and comprises normal pressure.

The working medium is then input to a compression means 204 of the compression and expansion unit. When being output by the compression means, the working medium has a higher temperature and a higher pressure, as the compression means 204 compresses the medium and heats it during compression. This may be the maximum temperature and maximum pressure within the arrangement.

The working medium is then input to a second thermal energy storage 103. When being output by the second storage, the working medium is at a lower temperature than at the input to the second storage, but is for instance higher than ambient temperature, and has the same pressure. Energy is stored as heat in the second storage 103.

After this, the working medium is supplied to an expansion means 206 of the compression and expansion unit. The expansion means may be coupled to the compression means by a shaft 205. At the output of the expansion means, the working medium is at a lower temperature than at the input to the expansion means but at a higher temperature than at the input to the first thermal energy storage and has a normal pressure (as the expander 206 expands the medium and cools it down). At this point, waste heat may be removed from the arrangement.

Fig. 3 shows the thermal energy storage and recovery arrangement of Fig. 2 in discharging mode according to an embodiment, In this case, the arrangement 300 comprises a compression means 306 and an expansion means 304, coupled via a shaft 305, which are interchanged compared to Fig. 2.

The temperatures and pressures do not have to be same as compared to Fig. 2. The output of the first thermal energy storage may be at ambient temperature and normal or ambient pressure.

The compression means and expansion means 204, 206 and 304, 306 may be one single unit. They may also be four separate units.

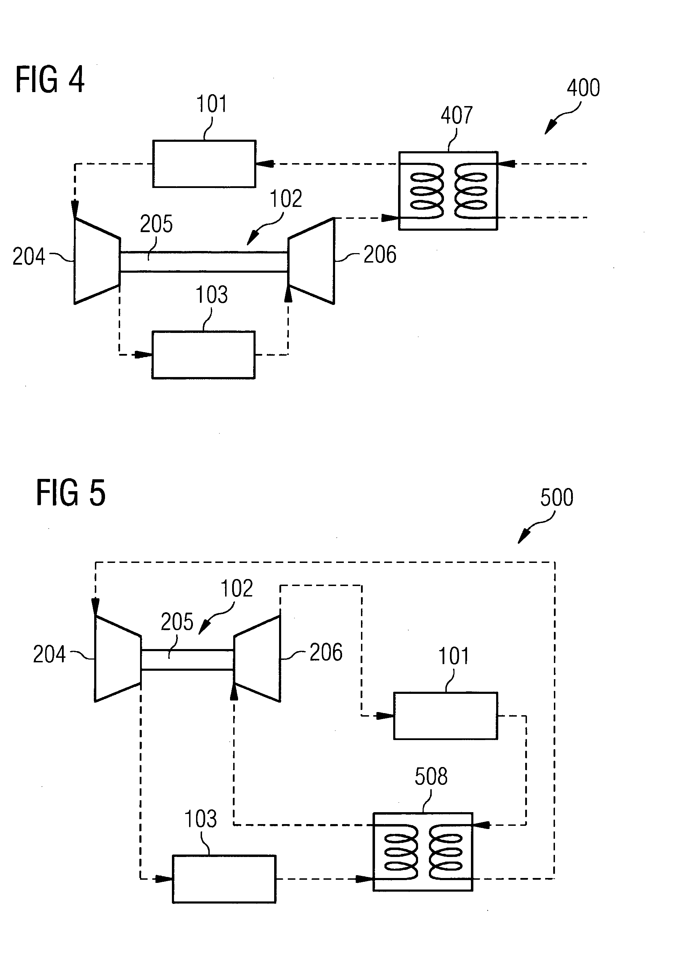

Fig. 4 shows a thermal energy storage and recovery arrangement 400 according to a further embodiment. In this case, the first thermal energy storage 101 is coupled to the expansion means 206 via a heat exchanging device 407. The heat exchanging device may be coupled to an external device.

By using such a configuration, the same working medium (for example air) may be reused or recycled. In a discharging mode, the first thermal energy storage 101 would be coupled to a compression means via the heat exchanging device.

Fig. 5 illustrates a thermal energy storage and recovery arrangement 500 according to a further embodiment.

According to this embodiment, the output of the second thermal energy storage 103 is coupled to a first side of a heat exchanging device 508. The first side of the heat exchanging device is further coupled to the expansion means 206. The output of the expansion means is coupled to the input of the first thermal energy storage 101. The output of the first thermal energy storage is coupled to a second side of the heat exchanging device 508. The second side of the heat exchanging device is further coupled to the input of the compression means.

By using such a configuration, the maximum temperature of the "non pressure storage", i.e. the first storage device, can be chosen lower than the input temperature for the compressor by inserting the heat exchanger. For example, as shown in Fig. 1 to 3, the large temperature drop in the storages leads to high temperature lost and larger wear on the heat material. By using a configuration as shown in Fig. 5, the compressor/expander may see the same temperatures as before but the temperature change in each storage may be highly reduced.

The thermal energy storage and recovery system according to embodiments of the invention may provide the following features:

No cold storage might be needed. By using two hot storages, the expander in the charging mode may create more power than the compressor in the discharging.

The proposed arrangement may be easier produced as there is no machinery that has to work with cold material.

The temperature of the first thermal energy (non-pressured) storage can be chosen to be the ambient temperature and the temperature for district heating. Thus, the district heating system can be used as the storage (no storage needs to be build). Further, in the discharge cycle, the compressor can be build with a cooler such that pressure may be made without temperature increase - later the pressurized gas can be heated by the district heating.

The temperature difference of the storages input/output *(t_difference) may be* smaller than in common systems. The equation of the temperature loss (*t_loss*) in a storage may be given by

$$t\_loss = Constant*t\_difference,$$

where *Constant is* constant for every storage given a specific inflow speed. From this equation it may be seen that the temperature losses is smaller than in common systems.

The waste heat may be at ambient temperature. Thus, it may be possible to make an implementation where the surrounding air is used in the system. This may save an additional heat exchanger in the system for releasing the waste heat.

Due to the temperature range of the first storage, it may be possible to construct this storage with water as heating material. Water is both an extremely cheap material and it have a heat capacity that is for instance double of stones (the storage need only to be half the size).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A thermal energy storage and recovery arrangement, the arrangement (100, 200, 300, 400) comprising

a first thermal energy storage (101),
a compression and expansion unit (102) coupled to the first thermal energy storage (101), and
a second thermal energy storage (103) coupled to the compression and expansion unit (102),
wherein, in a charging mode,

the first thermal energy storage (101) is adapted for receiving a working medium being supplied to the thermal energy storage and recovery arrangement (100, 200, 300, 400) and for releasing thermal energy to the received working medium,
the compression and expansion unit (102) is adapted for receiving the working medium from the first thermal energy storage (101) and for compressing the working medium,
the second thermal energy storage (103) is adapted for receiving the compressed working medium from the compression and expansion unit (102), for receiving thermal energy from the compressed working medium and for storing at least a part of this energy, and
the compression and expansion unit (102) is adapted for receiving the compressed working medium from the second thermal energy storage (103) and for expanding the compressed working medium,

**characterized in that**
the first thermal energy storage (101) and the second thermal energy storage (103) are adapted to work at a temperature being equal to or higher than the ambient temperature of the thermal energy storage and recovery arrangement (100, 200, 300, 400).

2. The thermal energy storage and recovery arrangement as set forth in claim 1,
wherein, in a discharging mode,
the compression and expansion unit (102) is adapted for receiving a working medium and for compressing the received working medium,
the second thermal energy storage (103) is adapted for receiving the compressed working medium from the compression and expansion unit (102) and for releasing thermal energy to the compressed working medium,
the compression and expansion unit (102) is adapted for receiving the compressed working medium from the second thermal energy storage (103) and for expanding the compressed working medium, and
the first thermal energy storage (101) is adapted for receiving the expanded working medium from the compression and expansion unit (102), for receiving thermal energy from the expanded working medium, for storing at least a part of this energy and for outputting the working medium.

3. The thermal energy storage and recovery arrangement as set forth in any one of the preceding claims,
wherein the first thermal energy storage (101) is adapted to work at a first pressure, and the second thermal energy storage (102) is adapted to work at a second pressure being higher than the first pressure,
wherein the first pressure corresponds to an ambient pressure of the thermal energy storage and recovery arrangement (100, 200, 300, 400).

4. The thermal energy storage and recovery arrangement as set forth in any one of the preceding claims,
wherein the compression and expansion unit (102) comprises at least one compression means (204) and at least one expansion means (206).

5. The thermal energy storage and recovery arrangement as set forth in any one of the preceding claims, further comprising
a heat exchanging device (407, 508), wherein a first side of the heat exchanging device (407, 508) is coupled between the compression and expansion unit (102) and the first thermal energy storage (101).

6. The thermal energy storage and recovery arrangement as set forth in claim 5,
wherein the first side of the heat exchanging device (407, 508) is coupled between an expansion means (304) of the compression and expansion unit (102) and the first thermal energy storage (101), and
wherein a second side of the heat exchanging device (407, 508) is coupled to an external device.

7. The thermal energy storage and recovery arrangement as set forth in claim 5,
wherein the first side of the heat exchanging device (407, 508) is coupled between a compression means (204, 306) of the compression and expansion unit (102) and the first thermal energy storage (101), and
wherein a second side of the heat exchanging device (407, 508) is coupled between the second thermal energy storage (102) and an expansion means of the compression and expansion unit (102).

8. The thermal energy storage and recovery arrangement as set forth in any one of the preceding claims, wherein the working medium is gas, in particular air.

9. The thermal energy storage and recovery arrangement as set forth in any one of the preceding claims, wherein the first thermal energy storage (101) comprises a liquid medium as storage material, in particular wherein the liquid medium is water.

10. The thermal energy storage and recovery arrangement as set forth in any one of the preceding claims,
wherein the temperature of the medium being supplied to the system corresponds to an ambient temperature of the thermal energy storage and recovery arrangement (100, 200, 300, 400).

11. A thermal energy storage and recovery system comprising a thermal energy storage and recovery arrangement (100, 200, 300, 400) as set forth in any one of the preceding claims, and

a heat consumption arrangement, which is connected directly or indirectly to the thermal energy storage and recovery arrangement (100, 200, 300, 400) and which is adapted to receive thermal energy from the medium of the thermal energy storage and recovery arrangement (100, 200, 300, 400).

12. The thermal energy storage and recovery system as set forth in claim 11, wherein the heat consumption arrangement comprises a district heating installation system.

13. The thermal energy storage and recovery system as set forth in claim 11, wherein the first thermal energy storage (101) is part of the district heating installation system.

14. A method for storing and recovering thermal energy in a thermal energy storage and recovery arrangement (100, 200, 300, 400), the method comprising
in a charging mode, receiving, by a first thermal energy storage (101), a working medium being supplied to the thermal energy storage and recovery arrangement (100, 200, 300, 400) and releasing, by the first thermal energy storage (101), thermal energy to the received working medium,
receiving, by a compression and expansion unit (102) coupled to the first thermal energy storage (101), the working medium from the first thermal energy storage and compressing, by the compression and expansion unit (102), the working medium,
receiving, by a second thermal energy storage (103) coupled to the compression and expansion unit (102), the compressed working medium from the compression and expansion unit,
receiving, by the second thermal energy storage (103), thermal energy from the compressed working medium and storing at least a part of this energy in the second thermal energy storage (103), and
receiving, by the compression and expansion unit (102), the compressed working medium from the second thermal energy storage (103) and expanding, by the compression and expansion unit (102), the compressed working medium,
**characterized in that**
the first thermal energy storage (101) and the second thermal energy storage (103) are adapted to work at a temperature being equal to or higher than the ambient temperature of the thermal energy storage and recovery arrangement.

**Patentansprüche**

1. Wärmeenergiespeicher- und -rückgewinnungsanordnung (100, 200, 300, 400), die Folgendes umfasst:

einen ersten Wärmeenergiespeicher (101),
eine Kompressions- und Expansionseinheit (102), die mit dem ersten Wärmeenergiespeicher (101) gekoppelt ist, und
einen zweiten Wärmeenergiespeicher (103), der mit der Kompressions- und Expansionseinheit (102) gekoppelt ist,
wobei in einem Auflademodus

der erste Wärmeenergiespeicher (101) so ausgelegt ist, dass er ein Arbeitsmedium aufnimmt, das zur Wärmeenergiespeicher- und -rückgewinnungsanordnung (100, 200, 300, 400) geleitet wird, und Wärmeenergie an das aufgenommene Arbeitsmedium abgibt,
die Kompressions- und Expansionseinheit (102) so ausgelegt ist, dass sie das Arbeitsmedium aus dem ersten Wärmeenergiespeicher (101) aufnimmt und dieses komprimiert,
der zweite Wärmeenergiespeicher (103) so ausgelegt ist, dass er das komprimierte Arbeitsmedium aus der Kompressions- und Expansionseinheit (102) aufnimmt, Wärmeenergie aus dem komprimierten Arbeitsmedium aufnimmt und zumindest einen Teil dieser Energie speichert, und
die Kompressions- und Expansionseinheit (102) so ausgelegt ist, dass sie das komprimierte Arbeitsmedium aus dem zweiten Wärmeenergiespeicher (103) aufnimmt und dieses expandiert,

**dadurch gekennzeichnet, dass**

der erste Wärmeenergiespeicher (101) und der zweite Wärmeenergiespeicher (103) so ausgelegt sind, dass sie bei einer Temperatur arbeiten, die mindestens der Umgebungstemperatur der Wärmeenergiespeicher- und -rückgewinnungsanordnung (100, 200, 300, 400) entspricht.

2. Wärmeenergiespeicher- und -rückgewinnungsanordnung nach Anspruch 1,
wobei in einem Entlademodus
die Kompressions- und Expansionseinheit (102) so ausgelegt ist, dass sie ein Arbeitsmedium aufnimmt und dieses komprimiert,
der zweite Wärmeenergiespeicher (103) so ausgelegt ist, dass er das komprimierte Arbeitsmedium aus der Kompressions- und Expansionseinheit (102) aufnimmt und Wärmeenergie an das komprimierte Arbeitsmedium abgibt,
die Kompressions- und Expansionseinheit (102) so ausgelegt ist, dass sie das komprimierte Arbeitsmedium aus dem zweiten Wärmeenergiespeicher (103) aufnimmt und dieses expandiert, und
der erste Wärmeenergiespeicher (101) so ausgelegt ist, dass er das expandierte Arbeitsmedium aus der Kompressions- und Expansionseinheit (102) aufnimmt, Wärmeenergie aus dem expandierten Arbeitsmedium aufnimmt, zumindest einen Teil dieser Energie speichert und das Arbeitsmedium abgibt.

3. Wärmeenergiespeicher- und -rückgewinnungsanordnung nach einem der vorhergehenden Ansprüche,
bei der der erste Wärmeenergiespeicher (101) so ausgelegt ist, dass er bei einem ersten Druck arbeitet, und der zweite Wärmeenergiespeicher (102) so ausgelegt ist, dass er bei einem zweiten Druck arbeitet, der höher ist als der erste Druck,
wobei der erste Druck einem Umgebungsdruck der Wärmeenergiespeicher- und -rückgewinnungsanordnung (100, 200, 300, 400) entspricht.

4. Wärmeenergiespeicher- und -rückgewinnungsanordnung nach einem der vorhergehenden Ansprüche,
bei der die Kompressions- und Expansionseinheit (102) mindestens ein Kompressionsmittel (204) und mindestens ein Expansionsmittel (206) umfasst.

5. Wärmeenergiespeicher- und -rückgewinnungsanordnung nach einem der vorhergehenden Ansprüche, die ferner Folgendes umfasst:

eine Wärmeaustauschvorrichtung (407, 508), wobei eine erste Seite der Wärmeaustauschvorrichtung (407, 508) zwischen die Kompressions- und Expansionseinheit (102) und den ersten Wärmeenergiespeicher (101) geschaltet ist.

6. Wärmeenergiespeicher- und -rückgewinnungsanordnung nach Anspruch 5,
bei der die erste Seite der Wärmeaustauschvorrichtung (407, 508) zwischen ein Expansionsmittel (304) der Kompressions- und Expansionseinheit (102) und den ersten Wärmeenergiespeicher (101) geschaltet ist und
eine zweite Seite der Wärmeaustauschvorrichtung (407, 508) mit einer externen Vorrichtung gekoppelt ist.

7. Wärmeenergiespeicher- und -rückgewinnungsanordnung nach Anspruch 5,
bei der die erste Seite der Wärmeaustauschvorrichtung (407, 508) zwischen ein Kompressionsmittel (204, 306) der Kompressions- und Expansionseinheit (102) und den ersten Wärmeenergiespeicher (101) geschaltet ist und
eine zweite Seite der Wärmeaustauschvorrichtung (407, 508) zwischen den zweiten Wärmeenergiespeicher (102) und ein Expansionsmittel der Kompressions- und Expansionseinheit (102) geschaltet ist.

8. Wärmeenergiespeicher- und -rückgewinnungsanordnung nach einem der vorhergehenden Ansprüche, bei der es sich bei dem Arbeitsmedium um Gas, insbesondere Luft, handelt.

9. Wärmeenergiespeicher- und -rückgewinnungsanordnung nach einem der vorhergehenden Ansprüche, bei der der erste Wärmeenergiespeicher (101) ein flüssiges Medium als Speichermaterial umfasst, wobei es sich bei dem flüssigen Medium insbesondere um Wasser handelt.

10. Wärmeenergiespeicher- und -rückgewinnungsanordnung nach einem der vorhergehenden Ansprüche,
bei der die Temperatur des zum System geleiteten Mediums einer Umgebungstemperatur der Wärmeenergiespeicher- und -rückgewinnungsanordnung (100, 200, 300, 400) entspricht.

11. Wärmeenergiespeicher- und -rückgewinnungssystem, das Folgendes umfasst:

eine Wärmeenergiespeicher- und -rückgewinnungsanordnung (100, 200, 300, 400) nach einem der vorhergehenden Ansprüche und
eine Wärmeverbrauchsanordnung, die direkt oder indirekt mit der Wärmeenergiespeicher- und -rückgewinnungsanordnung (100, 200, 300, 400) verbunden und so ausgelegt ist, dass sie Wärmeenergie aus dem Medium der Wärmeenergiespeicher- und -rückgewinnungsanordnung (100, 200, 300, 400) aufnimmt.

12. Wärmeenergiespeicher- und -rückgewinnungssystem nach Anspruch 11, bei dem die Wärmeverbrauchsanordnung ein Fernheizanlagensystem umfasst.

13. Wärmeenergiespeicher- und -rückgewinnungssystem nach Anspruch 11, bei dem der erste Wärmeenergiespeicher (101) Bestandteil des Fernheizanlagensystems ist.

14. Verfahren zum Speichern und Rückgewinnen von Wärmeenergie in einer Wärmeenergiespeicher- und -rückgewinnungsanordnung (100, 200, 300, 400), das Folgendes umfasst:

in einem Auflademodus Aufnehmen eines Arbeitsmediums, das zur Wärmeenergiespeicher- und -rückgewinnungsanordnung (100, 200, 300, 400) geleitet wird, durch einen ersten Wärmeenergiespeicher (101) und Abgeben von Wärmeenergie durch den ersten Wärmeenergiespeicher (101) an das aufgenommene Arbeitsmedium,
Aufnehmen des Arbeitsmediums aus dem ersten Wärmeenergiespeicher (101) durch eine mit dem ersten Wärmeenergiespeicher gekoppelte Kompressions- und Expansionseinheit (102) und Komprimieren des Arbeitsmediums durch die Kompressions- und Expansionseinheit (102),
Aufnehmen des komprimierten Arbeitsmediums aus der Kompressions- und Expansionseinheit (102) durch einen mit der Kompressions- und Expansionseinheit gekoppelten zweiten Wärmeenergiespeicher (103),
Aufnehmen von Wärmeenergie aus dem komprimierten Arbeitsmedium durch den zweiten Wärmeenergiespeicher (103) und Speichern von zumindest einem Teil dieser Energie in dem zweiten Wärmeenergiespeicher (103) und
Aufnehmen des komprimierten Arbeitsmediums aus dem zweiten Wärmeenergiespeicher (103) durch die Kompressions- und Expansionseinheit (102) und Expandieren des komprimierten Arbeitsmediums durch die Kompressions- und Expansionseinheit (102),
**dadurch gekennzeichnet, dass**
der erste Wärmeenergiespeicher (101) und der zweite Wärmeenergiespeicher (103) so ausgelegt sind, dass sie bei einer Temperatur arbeiten, die mindestens der Umgebungstemperatur der Wärmeenergiespeicher- und -rückgewinnungsanordnung entspricht.

**Revendications**

1. Agencement de stockage et de récupération d'énergie thermique, l'agencement (100, 200, 300, 400) comprenant

un premier stockage d'énergie thermique (101),
une unité de compression et de détente (102) couplée au premier stockage d'énergie thermique (101), et
un second stockage d'énergie thermique (103) couplé à l'unité de compression et de détente (102),
dans lequel, dans un mode de charge,

le premier stockage d'énergie thermique (101) est adapté pour recevoir un milieu de travail fourni à l'agencement de stockage et de récupération d'énergie thermique (100, 200, 300, 400) et pour libérer de l'énergie thermique vers le milieu de travail reçu, l'unité de compression et de détente (102) est adaptée pour recevoir le milieu de travail provenant du premier stockage d'énergie thermique (101) et pour comprimer le milieu de travail,
le second stockage d'énergie thermique (103) est adapté pour recevoir le milieu de travail comprimé provenant de l'unité de compression et de détente (102), pour recevoir de l'énergie thermique provenant du milieu de travail comprimé et pour stocker au moins une partie de cette énergie, et
l'unité de compression et de détente (102) est adaptée pour recevoir le milieu de travail comprimé provenant du second stockage d'énergie thermique (103) et pour détendre le milieu de travail comprimé,

**caractérisé en ce que**
le premier stockage d'énergie thermique (101) et le second stockage d'énergie thermique (103) sont adaptés pour fonctionner à une température égale ou supérieure à la température ambiante de l'agencement de stockage et de récupération d'énergie thermique (100, 200, 300, 400).

2. Agencement de stockage et de récupération d'énergie thermique selon la revendication 1,

dans lequel, dans un mode de décharge,

l'unité de compression et de détente (102) est adaptée pour recevoir un milieu de travail et pour comprimer le milieu de travail reçu,

le second stockage d'énergie thermique (103) est adapté pour recevoir le milieu de travail comprimé provenant de l'unité de compression et de détente (102) et pour libérer de l'énergie thermique vers le milieu de travail comprimé,

l'unité de compression et de détente (102) est adaptée pour recevoir le milieu de travail comprimé provenant du second stockage d'énergie thermique (103) et pour détendre le milieu de travail comprimé, et

le premier stockage d'énergie thermique (101) est adapté pour recevoir le milieu de travail détendu provenant de l'unité de compression et de détente (102), pour recevoir de l'énergie thermique provenant du milieu de travail détendu, pour stocker au moins une partie de cette énergie et pour produire le milieu de travail.

3.  Agencement de stockage et de récupération d'énergie thermique selon l'une ou l'autre des revendications précédentes,

dans lequel le premier stockage d'énergie thermique (101) est adapté pour fonctionner à une première pression, et le second stockage d'énergie thermique (102) est adapté pour fonctionner à une seconde pression supérieure à la première pression,

dans lequel la première pression correspond à une pression ambiante de l'agencement de stockage et de récupération d'énergie thermique (100, 200, 300, 400).

4.  Agencement de stockage et de récupération d'énergie thermique selon l'une quelconque des revendications précédentes,

dans lequel l'unité de compression et de détente (102) comprend au moins un moyen de compression (204) et au moins un moyen de détente (206).

5.  Agencement de stockage et de récupération d'énergie thermique selon l'une quelconque des revendications précédentes, comprenant en outre

un dispositif échangeur de chaleur (407, 508) dans lequel un premier côté du dispositif échangeur de chaleur (407, 508) est couplé entre l'unité de compression et de détente (102), et le premier stockage d'énergie thermique (101).

6.  Agencement de stockage et de récupération d'énergie thermique selon la revendication 5,

dans lequel le premier côté du dispositif échangeur de chaleur (407, 508) est couplé entre un moyen de détente (304) de l'unité de compression et de détente (102), et le premier stockage d'énergie thermique (101), et

dans lequel un second côté du dispositif échangeur de chaleur (407, 508) est couplé à un dispositif extérieur.

7.  Agencement de stockage et de récupération d'énergie thermique selon la revendication 5,

dans lequel le premier côté du dispositif échangeur de chaleur (407, 508) est couplé entre un moyen de compression (204, 306) de l'unité de compression et de détente (102), et le premier stockage d'énergie thermique (101), et

dans lequel un second côté du dispositif échangeur de chaleur (407, 508) est couplé entre le second stockage d'énergie thermique (102), et un moyen de détente de l'unité de compression et de détente (102).

8.  Agencement de stockage et de récupération d'énergie thermique selon l'une quelconque des revendications précédentes,

dans lequel le milieu de travail est du gaz, en particulier de l'air.

9.  Agencement de stockage et de récupération d'énergie thermique selon l'une quelconque des revendications précédentes,

dans lequel le premier stockage d'énergie thermique (101) comprend un milieu liquide servant de matière de stockage, en particulier dans lequel le milieu liquide est de l'eau.

10. Agencement de stockage et de récupération d'énergie thermique selon l'une quelconque des revendications précédentes,

dans lequel la température du milieu fourni au système correspond à une température ambiante de l'agencement de stockage et de récupération d'énergie thermique (100, 200, 300, 400).

11. Système de stockage et de récupération d'énergie thermique comprenant

un agencement de stockage et de récupération d'énergie thermique (100, 200, 300, 400) selon l'une quelconque des revendications précédentes, et

un agencement de consommation de chaleur qui est relié directement ou indirectement à l'agencement de stockage et de récupération d'énergie thermique (100, 200, 300, 400) et qui est adapté pour recevoir de l'énergie thermique provenant du milieu de l'agencement de stockage et de récupération d'énergie thermique (100, 200, 300, 400).

**12.** Système de stockage et de récupération d'énergie thermique selon la revendication 11,
dans lequel l'agencement de consommation de chaleur comprend un système d'installation de chauffage urbain.

**13.** Système de stockage et de récupération d'énergie thermique selon la revendication 11,
dans lequel le premier stockage d'énergie thermique (101) fait partie du système d'installation de chauffage urbain.

**14.** Procédé pour stocker et récupérer de l'énergie thermique dans un agencement de stockage et de récupération d'énergie thermique (100, 200, 300, 400), le procédé comprenant
dans un mode de charge, la réception, par un premier stockage d'énergie thermique (101), d'un milieu de travail fourni à l'agencement de stockage et de récupération d'énergie thermique (100, 200, 300, 400), et la libération, par le premier stockage d'énergie thermique (101), d'énergie thermique vers le milieu de travail reçu,
la réception, par une unité de compression et de détente (102) couplée au premier stockage d'énergie thermique (101), du milieu de travail provenant du premier stockage d'énergie thermique, et la compression, par l'unité de compression et de détente (102), du milieu de travail,
la réception, par un second stockage d'énergie thermique (103) couplé à l'unité de compression et de détente (102), du milieu de travail comprimé provenant de l'unité de compression et de détente,
la réception, par le second stockage d'énergie thermique (103), de l'énergie thermique provenant du milieu de travail comprimé, et le stockage d'au moins une partie de cette énergie dans le second stockage d'énergie thermique (103), et
la réception, par l'unité de compression et de détente (102), du milieu de travail comprimé provenant du second stockage d'énergie thermique (103), et la détente, par l'unité de compression et de détente (102), du milieu de travail comprimé,
**caractérisé en ce que**
le premier stockage d'énergie thermique (101) et le second stockage d'énergie thermique (103) sont adaptés pour fonctionner à une température égale ou supérieure à la température ambiante de l'agencement de stockage et de récupération d'énergie thermique.

**FIG 1**

**FIG 2**

**FIG 3**

## FIG 4

## FIG 5

**EP 2 718 651 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2916101 A1
- US 20100251711 A1